# EUROPÄISCHE PATENTSCHRIFT

(11) **EP 1 798 541 B1**
(45) Veröffentlichungstag und Bekanntmachung des Hinweises auf die Patenterteilung: **19.11.2008**
(21) Anmeldenummer: 05027138.6
(22) Anmeldetag: 13.12.2005
(51) Int. Cl.: G01N 21/53, G08B 17/103

(54) **Streulicht-Sichtweitenmessgerät**
Visibility measuring device using light scattering
Dispositif de mesure de la visibilité par diffusion de la lumière

(43) Veröffentlichungstag der Anmeldung: 20.06.2007
(73) Patentinhaber: SICK MAIHAK GmbH, 79183 Waldkirch (DE)
(72) Erfinder: Kaufmann, Jürgen, 79211 Denzlingen (DE); Schiffler, Ingo, 79115 Freiburg (DE); Smetana, Klaus, 79312 Emmendingen (DE)
(74) Vertreter: Ludewigt, Christoph

(56) Entgegenhaltungen:
- EP-A- 0 036 370
- EP-A- 0 664 445
- FR-A- 2 736 183
- US-A- 4 374 329

## Beschreibung

Die Erfindung betrifft ein Streulicht-Sichtweitenmessgerät nach dem Oberbegriff des Anspruchs 1. Des Weiteren ist ein Verfahren zum Betrieb eines Streulicht-Sichtweitenmessgerätes aufgezeigt.

Streulichtmessgeräte werden zur Erfassung von Partikeln (Aerosolen, Staubteilchen, usw.) in Abluftkanälen bzw. in der Atmosphäre eingesetzt. Dadurch ist es möglich, zum Beispiel den Rußpartikelausstoß in einem Kamin zu ermitteln. Weiterhin werden Streulichtmessgeräte im Straßenverkehr, in der Schifffahrt oder Luftfahrt eingesetzt, um gegebenenfalls ein Warnsignal beim Unterschreiten einer definierten Sichtweite auszugeben.

Geräte zur Messung der Sichtweite arbeiten dabei entweder nach dem Transmissionsprinzip oder nach dem Prinzip der Lichtstreuung.

Die Sichtweitenmessgeräte nach dem Transmissionsprinzip, bekannt auch unter dem Begriff eines Transmissometers, senden an einem Ende einer Messstrecke eine definierte Lichtmenge in die Messstrecke und empfangen mit einem Lichtempfänger an dem gegenüberliegenden Ende der Messstrecke die dort ankommende Lichtmenge. Befinden sich keine Partikel in der Messstrecke, wird die vom Empfänger erfasste Lichtmenge einem Transmissionswert von 100% zugeordnet. Aus einem mathematischen Zusammenhang zwischen der Länge der Messstrecke und dem am Empfänger gemessenen Transmissionswert kann somit die Sichtweite ermittelt werden.

Zu dem Prinzip des Transmissometers zählen auch jene Geräte, welche zum Beispiel mit einer optischen Umlenkeinheit den Lichtstrahl mehrfach durch die Messstrecke führen und erst dann die ankommende Lichtmenge bewerten.

Sichtweitenmessgeräte, die nach dem Prinzip der Streulichtmessung arbeiten, verwenden ebenfalls einen Lichtsender und einen Lichtempfänger. Dabei sind jedoch Lichtsender und Lichtempfänger so angeordnet, dass sich ein vom Lichtsender ausgesandtes Sendelichtbündel und ein vom Lichtempfänger empfangenes Empfangslichtbündel derart kreuzen, dass kein Licht vom Lichtsender auf direktem Wege zum Lichtempfänger gelangen kann.

Befindet sich der Lichtsender vor und der Lichtempfänger hinter einem Messbereich, in dem gegebenenfalls vorhandene Partikel erkannt werden sollen, so findet das Prinzip der vorwärtsgestreuten Messung Anwendung (Forwardscatter-Prinzip).

Sind jedoch der Lichtsender und der Lichtempfänger beide auf der gleichen Seite vor dem Messbereich, so findet das Prinzip der rückwärtsgestreuten Messung statt (Backscatter-Prinzip).

Da, wie bereits erwähnt, aufgrund der Kreuzung der beiden Lichtbündelachsen bei einem Streulichtmessgerät kein Licht vom Lichtsender direkt zum Lichtempfänger gelangen kann, wird der Lichtempfänger erst dann einen Anteil des Sendelichtbündels erfassen können, wenn das Sendelicht an einem Partikel innerhalb des Messbereiches abgelenkt, d. h. gestreut wird. Dementsprechend erhält der Lichtempfänger proportional der Partikelhäufigkeit mehr Licht, was gleichzeitig einer geringeren Sichtweite entspricht.

Neben den zahlreichen Vorteilen, die Streulichtgeräte gegenüber den Transmissionsgeräten haben, ist ein wesentlicher Nachteil darin begründet, dass bei guter Sichtweite kein oder nur eine ganz geringe Lichtmenge auf den Lichtempfänger fällt, wodurch eine Prüfung der Funktionsfähigkeit der einzelnen Gerätekomponenten bzw. Gerätebaugruppen nicht ohne weitere zusätzliche Maßnahmen möglich ist. Würde beispielsweise der Lichtsender durch einen Defekt ausfallen, so würde selbst bei großer Partikelhäufigkeit im Messbereich kein Licht zum Lichtempfänger gelangen und dies würde dann als extrem gute Sichtweite fehlinterpretiert.

Um derartige Fehlerfälle auszuschließen, wird nach der DE 19 05 016 vorgeschlagen, dass in regelmäßigen Abständen kurzzeitig mit einer Blende der Lichtweg vom lichtstreuenden Partikel zum Lichtempfänger so verschlossen wird, dass kein Streulicht von den Partikeln zum Lichtempfänger gelangen kann. In dieser Zeit wird dann eine bestimmte Prüflichtmenge vom Lichtsender direkt dem Lichtempfänger zugeführt. Auf diese Weise ist es möglich, einige Komponenten des Streulichtgerätes auf Funktionsfähigkeit zu überwachen. Nachteilig an diesem Stand der Technik ist jedoch, dass eine ganze Anzahl von möglichen Fehlerfällen auf diesem Wege nicht erkannt werden können. So wird zum Beispiel nicht erkannt, wenn das Sendelichtbündel und/oder das Empfangslichtbündel durch ein relativ großflächiges Hindernis vollständig unterbrochen wird und dadurch kein Licht zum Lichtempfänger gelangen kann. Das Streulichtgerät interpretiert dann die Tatsache, dass kein Licht zum Lichtempfänger gelangt, als eine große Sichtweite. Gleichermaßen wird eine kontinuierlich zunehmende Verschmutzung an den optischen Grenzflächen nicht erfasst, weil diese Grenzflächen ebenfalls nicht im optischen Pfad des zum Lichtempfänger gelangenden Prüflichtes eingeschlossen sind.

Eine weitere Lehre zur Lösung einiger dieser für Streulichtgeräte typischen Probleme ist der DE 44 01 755 A1 zu entnehmen. Hier wird vorgeschlagen, in das eigentliche Streulichtmessgerät, das nach dem Prinzip der Vorwärtsstreuung arbeitet, mit Hilfe von mindestens einem zusätzlichen Lichtempfänger oder durch einen zusätzlichen Lichtempfänger und einem zusätzlichen Lichtsender eine Transmissionsanordnung in das Streulichtmessgerät zu integrieren. Durch diese kombinierte und gesteuert umschaltbare Streulicht- und Transmissionsmessung soll es möglich sein, Hindernisse innerhalb der optischen Messstrecken richtig zu detektieren oder Messfehler durch Ablagerungen auf den optischen Grenzflächen zu kompensieren. Diese in der DE 44 01 755 A1 gezeigte Lehre hat jedoch den großen Nachteil, dass bei Verwendung von nur einem zusätzlichen Lichtempfänger zusätzliche Kosten entstehen und darüber hinaus mit dieser Transmissionsmessung praktisch nur die Hälfte der Streulichtmessstrecke getestet werden kann. Aus diesem Grunde wird in dieser Schrift auch darauf hingewiesen, zu dem zusätzlichen Lichtempfänger auch noch einen zusätzlichen Lichtsender einzusetzen. Neben den dadurch verursachten notwendigen Mehrkosten ist hierbei der wesentliche Nachteil darin zu sehen, dass diese optoelektronischen Komponenten sehr oft unterschiedliche Alterungseinflüsse haben. Dadurch ist nicht sichergestellt, dass über einen längeren Zeitraum hinweg zum Beispiel immer eine richtige Kompensation der durch Ablagerungen auf den optischen Grenzflächen entstehenden Messfehler durchgeführt wird. Dies ist bei einem Streulichtmessgerät insbesondere dadurch kritisch, weil immer dann, wenn eine geringe Partikelkonzentration vorherrscht, d. h. eine große Sichtweite ermittelt wird, die auszuwertenden Lichtmengen zwangsläufig sehr klein sind, so dass schon geringfügig falsche Kompensationswerte zu großen Messfehlern führen.

Aus der EP 0 036 370 ist eine Vorrichtung zur Sichtbewertung bekannt, bei der ein Lichtsender und ein Lichtempfänger nebeneinander und mit zueinander parallelen optischen Achsen auf der einen Seite eines Messvolumens angeordnet sind und ein Spiegelpaar auf der gegenüberliegenden Seite das Licht des Lichtsenders zum Lichtempfänger leiten kann. Einer der beiden Spiegel ist drehbar, so dass das Licht in seiner einen Drehstellung in der beschriebenen Weise das transmittierte Licht vom Lichtsender über beide Spiegel in den Lichtempfänger leitet, oder in seiner anderen Drehstellung Streulicht nur über den einen drehbaren Spiegel vom Lichtsender in den Lichtempfänger leitet. Aus dem Verhältnis von in diesen beiden Modi gemessenem transmittiertem und gestreutem Licht kann die Vorrichtung die Sichtweite durch das Medium im Messvolumen bestimmen.

Die US 4,374,329 beschreibt einen Rauchmelder mit kreisförmigem Querschnitt, bei dem ein Lichtsender einem Lichtempfänger gegenüber derart angeordnet ist, dass der direkte Lichtweg von einem spiegelnden Trennelement unterbrochen wird. Das Sende- und Empfangslichtbündel wird durch das Trennelement jeweils in einen an dem Trennelement vorbeilaufenden Messanteil, der sich in einem Messbereich zur Messung von Streulicht kreuzt, und in einen von dem Trennelement zu bzw. von der Gehäusewand gespiegelten Testanteil aufgeteilt. Im Betrieb ist im Auftreffbereich des Testanteils vor der Gehäusewand ein Schild angeordnet, der den Testanteil absorbiert. Somit kann nur gestreutes Licht aus dem Messbereich den Lichtempfänger treffen.

In einem Testmodus wird durch Verdrehung eines ringförmigen Elements mit dem Schild gegen eine Torsionsfeder das Schild mechanisch verschoben und gibt einen vom Drehwinkel abhängigen Teil eines verspiegelten Innenwandbereichs des Gehäuses frei. Dadurch wird der Testanteil und ein Teil des Messanteils auf den Lichtempfänger geworfen, ohne dass Rauch im Messbereich liegt, um die Funktionsfähigkeit und Empfindlichkeit zu testen. Wird keine Kraft mehr aufgewandt, dreht sich das Schild in die Betriebsposition zurück.

In der FR 2 736 183 A1 wird ein optischer Rauchdetektor offenbart, bei dem ein Lichtsender und ein Lichtempfänger gekreuzt zueinander angeordnet sind, so dass sich im Überschneidungsbereich ein Messbereich zur Rauchdetektion mittels Rückstreuung ergibt. Ein Ende eines hinter dem Messbereich angeordneten Lichtleiters ist auf die Senderichtung des Lichtsenders und das andere Ende auf die Empfangsrichtung des Lichtempfängers ausgerichtet, so dass bei freiem Messbereich ein Teil des Sendelichts hinter dem Messbereich aufgefangen und über den Lichtleiter erneut durch den Messbereich zum Lichtempfänger umgeleitet wird. Auf diese Weise empfängt der Lichtempfänger ständig ein Basissignal.

Der Erfindung liegt deshalb die Aufgabe zugrunde, ein Streulicht-Sichtweitenmessgerät und ein Verfahren zum Betrieb desselben zu schaffen, welches die Erkennung von systematischen Messfehlern verbessert. Insbesondere soll das Streulicht-Sichtweitenmessgerät eindeutige Aussagen über den Verschmutzungsgrad der optischen Grenzflächen bereitstellen. Darüber hinaus ist sicherzustellen, dass keine negativen Auswirkungen aufgrund der Bauteilalterungen der eingesetzten optoelektronischen Bauteile auftreten und dass Hindernisse im optischen Strahlengang als solche folgerichtig detektiert werden. Diese Aufgabe wird erfindungsgemäß durch das Streulicht-Sichtweitenmessgerät nach Anspruch 1 und das Verfahren nach Anspruch 9 gelöst

Zur Lösung dieser Aufgabe sieht die Erfindung vor, dass bei dem erfinderischen Streulicht-Sichtweitenmessgerät zumindest ein Teil des Sendelichtbündels zur Bildung eines Transmissionslichtpfades nach dem Durchstrahlen des Messbereiches auf eine Lichtumlenkeinheit trifft und damit auf der dem Lichtempfänger gegenüberliegenden Seite in das zum Lichtempfänger gerichtete Empfangslichtbündel eingespeist wird. Dieser Transmissionslichtpfad wird dann über die Lichtumlenkeinheit mit einer optischen Verschlusseinheit geöffnet, bzw. geschlossen. Der Transmissionslichtpfad schließt dabei die Streulichtmessstrecke ein.

Der Vorteil dieser Erfindung ist darin zu sehen, dass mit dem ein- und ausschaltbaren Transmissionslichtpfad über die Lichtumlenkeinheit eine zusätzliche Transmissionsmessung gezielt aktiviert werden kann, die im Vergleich zum Streulichtmessverfahren speziell bei guter Sichtweite ein großes Lichtsignal auf dem Lichtempfänger bewirkt, wodurch eine Funktionsprüfung des Streulichtmessgerätes möglich ist. Da für diesen Transmissionspfad der gleiche Lichtsender und der gleiche Lichtempfänger wie beim Streulichtmessbetrieb zum Einsatz kommt, hat die Vorrichtung den wesentlichen Vorteil, dass mögliche Bauteilalterungen dieser optoelektronischen Komponenten keine Auswirkungen haben. Ein weiterer Vorteil dieser Erfindung ist darin zu sehen, dass sich die geometrischen Strahlräume für den Streulichtmessbetrieb und den Transmissionsbetrieb in den entscheidenden Bereichen nicht unterscheiden. Dadurch wird in vorteilhafter Weise erreicht, dass Hindernisse in jedem Strahlraum sicher erkannt werden und dass immer die gleichen optischen Grenzflächen benutzt werden. Diese optischen Grenzflächen werden bei Streulichtmessgeräten in der Regel dazu verwendet, um das Gerät vor Schmutzeinwirkung zu schützen. Dabei ist natürlich nicht auszuschließen, dass sich auf diesen optischen Grenzflächen Schmutz ablagert, der dann zu einer Funktionsstörung führen kann. Auch diese Schmutzablagerungen, die systembedingt bei einem reinen Streulichtmessbetrieb nicht erfassbar sind, kann nach der Erfindung mit dem aktivierbaren Transmissionspfad erkannt werden.

Da dieser Transmissionspfad naturgemäß nicht dauernd aktiv sein kann, ist es nach der Erfindung vorgesehen, diesen Transmissionspfad mit Hilfe einer optischen Verschlusseinheit zeitgesteuert zu öffnen bzw. zu schließen. Um dies durchzuführen, ist es nach der Erfindung vorgesehen, zum Beispiel mit Hilfe eines Drehmagneten eine Blende zur Unterbrechung des Lichtpfades einzuschwenken. Es ist ebenfalls auch möglich, diese Blende mit einem Schrittmotor, einem Magnetzylinder oder einer anderen Antriebseinheit zu bewegen.

Wenngleich die Platzierung dieser optischen Verschlusseinheit innerhalb des Transmissionspfades systembedingt nicht exakt festgelegt ist, ist es von Vorteil, die Verschlusseinheit unmittelbar vor, nach oder innerhalb der Lichtumlenkeinheit anzuordnen, um störende Fremdreflexionen zu vermeiden.

Eine besonders vorteilhafte Ausführungsform für die Lichtumlenkeinheit ist dann vorhanden, wenn die Lichtumlenkeinheit aus einem flexiblen oder starren Lichtleiter besteht. Insbesondere bei der Verwendung eines flexiblen Lichtleiters ist es möglich, den Transmissionspfad sehr leicht an die jeweils vorherrschenden geometrischen Gegebenheiten des Streulichtmessgerätes anzupassen.

Bei Verwendung eines Lichtleiters für die Lichtumlenkeinheit kann der Wirkungsgrad, d. h. die Lichtmenge, welche über den Transmissionspfad übertragen wird, nach der Erfindung noch deutlich erhöht werden, wenn an den beiden Enden des Lichtleiters eine Ein- bzw. Auskoppeloptik angeordnet ist. Der Grund liegt darin, dass bereits mit Hilfe einer im richtigen Abstand vor dem Lichtleiter angeordneten Konvexlinse, deren freie Öffnung wesentlich größer als der Querschnitt des Lichtleiters ist, eine größere Lichtmenge in den Lichtleiter eingekoppelt werden kann. Analog dazu hat eine entsprechende Auskoppeloptik den Vorteil, dass das aus dem Lichtleiter austretende Licht nur innerhalb eines definierten, auf den Lichtempfänger ausgerichteten Raumwinkelbereiches ausgesendet wird, so dass der Lichtempfänger einen größeren Anteil des aus dem Lichtleiter austretenden Lichtes empfangen kann.

Zur Steuerung der Verschlusseinheit und damit zur Aktivierung des Transmissionspfades ist nach der Erfindung eine Zeitschaltvorrichtung vorgesehen. Damit ist es möglich, die Einschaltfolgen, die Einschaltabstände und die Einschaltdauer für den Transmissionslichtpfad automatisch zu steuern, so dass das Streulicht-Sichtweitenmessgerät gezielt an die jeweiligen Einsatzbedingungen angepasst werden kann.

In einer besonderen Ausführung der Erfindung wird vorgeschlagen, in einer speziellen Signalverarbeitungseinheit die Messwerte bei geöffneter Verschlusseinheit über einen vorwählbaren Zeitbereich zu akkumulieren. Damit ist es möglich, auch langfristige Messwertänderungen, wie sie beispielsweise durch eine langsam anwachsende Verschmutzung an den einzelnen optischen Grenzflächen hervorgerufen werden, zu erkennen und deren Auswirkung dann zu korrigieren bzw. eine entsprechende Warnmeldung auszugeben.

Im Folgenden wird die Erfindung unter Bezugnahme auf die Zeichnung im Einzelnen erläutert. In den Zeichnungen zeigen:
- Fig. 1: eine schematische Ansicht eines erfindungsgemäßen Streulicht-Sichtweitenmessgerätes bei vorwärtsgestreuter Messung.
- Fig. 2: eine schematische Ansicht eines erfindungsgemäßen Streulicht-Sichtweitenmessgerätes bei rückwärtsgestreuter Messung.

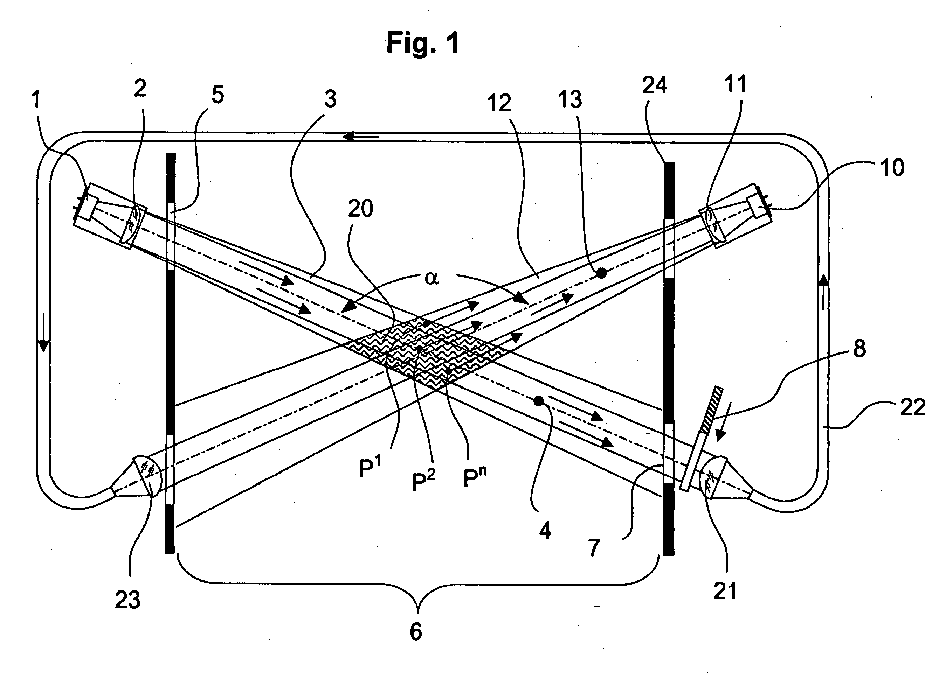

Wie aus Fig. 1 zu entnehmen ist, erzeugt ein Lichtsender 1 mittels einer zugeordneten Sendeoptik 2 ein Sendelichtbündel 3 mit einer optischen Sendelichtbündelachse 4. Das Sendelichtbündel 3 durchleuchtet eine optische Abschlussscheibe 5 und gelangt dadurch in einen Prüfraum 6. Im weiteren Verlauf trifft das Sendelichtbündel 3 am Ende des Prüfraums 6 auf eine Abschlussscheibe 7. Nach Durchtritt des Sendelichtbündels 3 durch die Abschlussscheibe 7 trifft das Sendelichtbündel 3 auf eine optische Verschlusseinheit 8, die während der Streulichtmessung die weitere Ausbreitung des Sendelichtbündels 3 verhindert.

Hinter einer dem Lichtsender 1 gegenüberliegenden Randbegrenzung 24 des Prüfraums 6 ist ein Lichtempfänger 10 mit einer Empfangsoptik 11 angeordnet. Der Lichtempfänger 10 kann mit Hilfe der Empfangsoptik 11 alles Licht, das sich innerhalb eines Empfangslichtbündels 12 auf den Lichtempfänger 10 zubewegt, erfassen und in ein der Lichtmenge proportionales elektrisches Signal umwandeln. Das Empfangslichtbündel 12 hat eine Empfangslichtbündelachse 13, die sich unter einem Winkel α mit der Sendelichtbündelachse 4 innerhalb des Prüfraums 6 schneidet. Mit der Überschneidung dieser beiden Bündelachsen 4, 13 überschneiden sich auch das Sendelichtbündel 3 und das Empfangslichtbündel 12, wodurch ein Messbereich 20 entsteht. Befinden sich keine Partikel (Aerosole, Staubteilchen usw.) in dem Messbereich 20, so gelangt kein direkter Lichtanteil vom Sendelichtbündel 4 in das Empfangslichtbündel 12 und somit auch kein Licht zum Lichtempfänger 10. Sind jedoch, wie in Fig. 1 dargestellt, die Partikel P¹, P² bis Pⁿ innerhalb des Messbereiches 20, so wird an diesen Partikeln ein Teil des Sendelichtbündels 4 in verschiedene Richtungen gestreut. Dabei werden auch einige Streulichtanteile zum Lichtempfänger 10 gelangen. Aus der Größe der so zum Lichtempfänger 10 gelangenden Lichtmenge ist es möglich, eine Aussage über die Häufigkeit der Partikel zu gewinnen, bzw. eine Information über die Sichtweite abzuleiten.

Würde jedoch, wie in Fig. 1 nicht dargestellt, ein Hindernis das Sendelichtbündel 4 im Bereich zwischen der Abschlussscheibe 5 und dem Messbereich 20 unterbrechen, so könnte kein Sendelicht in den Messbereich 20 eindringen, mit der Folge, dass selbst bei großer Häufigkeit der Partikel der Lichtempfänger 10 kein Licht empfängt und deshalb eine optimale Sichtweite ausgibt.

Um derartige fehlerhafte Ergebnisse auszuschließen, wird die optische Verschlusseinheit 8 kurzzeitig geöffnet, so dass ein Teil des Sendelichtbündels 4 mittels einer Einkoppeloptik 21 in einen Lichtleiter 22 gelangen kann. Im Lichtleiter 22 wird das eintretende Licht um den Prüfraum 6 herumgeführt und mit einer Auskoppeloptik 23 in die auf den Lichtempfänger 10 ausgerichtete Empfangslichtbündelachse 13 eingespeist. Auf diesem Wege entsteht in dem Streulicht-Sichtweitenmessgerät ein optischer Transmissionspfad vom Lichtsender 1 zum Lichtempfänger 10, mit dem nicht nur alle in den Prüfraumbegrenzungen eingesetzten Abschlussscheiben, sondern auch innerhalb des Prüfraums 6 alle möglichen optischen Strahlwege, insbesondere die Streulichtmessstrecke eingeschlossen sind.
Dadurch ist es möglich, Verschmutzungen an den Abschlussscheiben zu erfassen und ungewollte Hindernisse innerhalb der optischen Strahlwege zu erkennen.

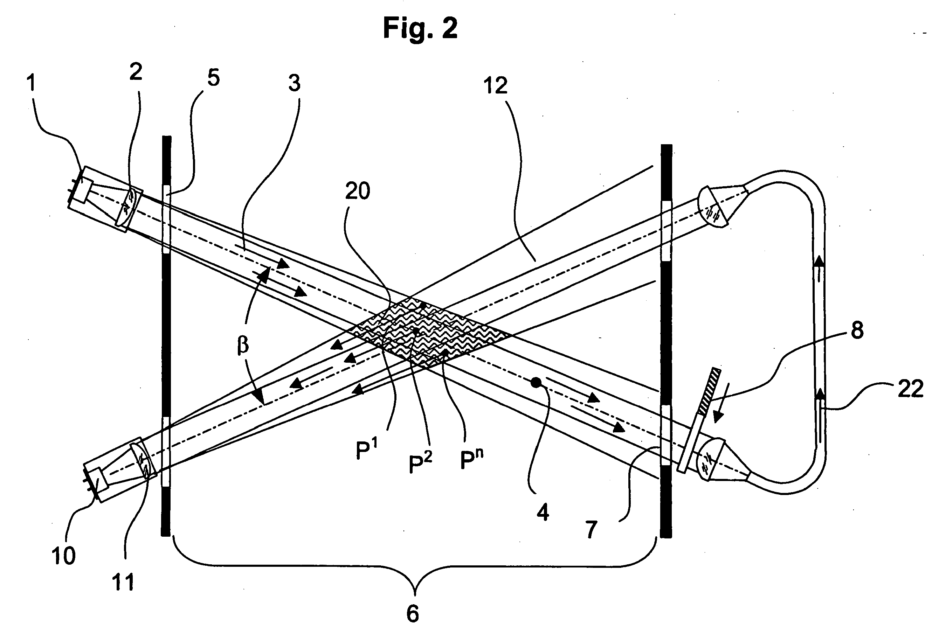

Das in Fig. 2 gezeigte Streulicht-Sichtweitenmessgerät zeigt nicht wie in Fig. 1 ein nach dem Prinzip der Vorwärtsstreuung arbeitendes Gerät, sondern in Fig. 2 wird ein Streulicht-Sichtweitenmessgerät dargestellt, das nach dem Prinzip der Rückwärtsstreuung eventuell vorhandene Partikel erkennt.
Dies bedeutet, dass der Lichtsender 1 mittels der zugeordneten Sendeoptik 2 das Sendelichtbündel 3 entlang der optischen Sendelichtbündelachse 4 aussendet. Das Sendelichtbündel 3 durchleuchtet auch hier die optische Abschlussscheibe 5 und gelangt dadurch in den Prüfraum 6. Im weiteren Verlauf trifft das Sendelichtbündel 3 am Ende des Prüfraums 6 wiederum auf die Abschlussscheibe 7. Nach Durchtritt des Sendelichtbündels 3 durch die Abschlussscheibe 7 trifft das Sendelichtbündel 3 auf die optische Verschlusseinheit 8, die während der Streulichtmessung die weitere Ausbreitung des Sendelichtbündels 3 verhindert.

Im Gegensatz zu dem Streulicht-Sichtweitenmessgerät nach Fig. 1 ist hier der Lichtempfänger 10 mit der dazugehörenden Empfangsoptik 11 jedoch an der gleichen Randbegrenzungsseite des Prüfraums 6 wie der Lichtsender 1 angeordnet.

Das Sendelichtbündel 3 und das Empfangslichtbündel 12 schneiden sich ebenfalls innerhalb des Prüfraums 6. Auch dabei entsteht ein Messbereich 20, in dem vorhandene Partikel P¹, P² bis Pⁿ vom Sendelichtbündel 4 angestrahlt werden. Vom Lichtempfänger 10 wird bei dieser Rückwärtsstreuung nach Fig. 2 jedoch nur der Lichtanteil zum Lichtempfänger 10 gelangen, der an den Partikel P¹, P² bis Pⁿ unter einem Winkel β zum einfallenden Sendelichtbündel 4 gestreut wird.

Auch bei diesem Prinzip der Rückwärtsstreuung ist es möglich, aus der Größe der so zum Lichtempfänger 10 gelangenden Lichtmenge eine Aussage über die Häufigkeit der Partikel im Messbereich 20 zu gewinnen und daraus eine Information über die Sichtweite abzuleiten.

Gleichermaßen würde jedoch auch hier, wie bei der Vorwärtsstreuung nach Fig. 1, ein Hindernis im Prüfraum 6, welches das Sendelichtbündel 4 im Bereich zwischen der Abschlussscheibe 5 und dem Messbereich 20 unterbricht, zu einem fehlerhaften Ergebnis führen.
Um derartige Fehler auszuschließen ist auch bei diesem Streulicht-Sichtweitenmessgerät ein optischer Transmissionspfad vorhanden, der mittels einer optischen Verschlusseinheit 8 aktiviert werden kann.
In diesem Fall wird mit dem Lichtleiter 22 der eintretende Teil des Sendelichtbündels 4 hinter der gleichen Randbegrenzungsseite des Prüfraums 6 wieder in das Empfangslichtbündel 12 eingespeist und trifft somit auf den Lichtempfänger 10.

Auf diese Weise ist auch bei der Ausführung des Streulicht-Sichtweitenmessgerätes nach Fig. 2 sichergestellt, dass alle in den Prüfraumbegrenzungen eingesetzten Abschlussscheiben in den Transmissionspfad eingebunden sind und dass auch innerhalb des Prüfraums 6 alle möglichen optischen Strahlwege auf Durchlässigkeit kontrolliert werden können.

Die elektrischen, optoelektronischen und optischen Komponenten sind, wie in Fig. 1 und Fig. 2 zu sehen ist, außerhalb des Prüfraumes 6 angeordnet und werden meistens in einem nicht dargestellten geschlossenen Gehäuse eingebaut. Die optischen Abschlussscheiben 5, 7 und ggf. weitere sind dann in dieses Gehäuse integriert. Ebenso ist es auch möglich, die Komponenten in zwei getrennte Gehäuse einzubauen, wobei diese beiden Gehäuse dann zum Beispiel mit Hilfe einer mechanischen Trägereinheit verbunden sind. Innerhalb dieses Gehäuses bzw. der Trägereinheit kann dann auch die Lichtumlenkeinheit, geschützt vor eventueller mechanischen Beschädigung, untergebracht werden.

## Patentansprüche

1. Streulicht-Sichtweitenmessgerät mit integrierter Funktionsprüfungs- und Korrektureinheit mit einem Lichtsender (1) zum Aussenden von einem Sendelichtbündel (3) in einen Messbereich (20) und einem Lichtempfänger (10) mit einem Empfangslichtbündel (12) zum Empfang von Streulicht aus dem Messbereich (20), wobei sich das Sendelichtbündel (3) und das Empfangslichtbündel (12) im Messbereich (20) kreuzförmig überschneiden, wobei zumindest ein Teil des Sendelichtbündels (3) als ein Transmissionslichtpfad nach dem Durchstrahlen des Messbereiches auf eine Lichtumlenkeinheit (22) trifft und wobei die Lichtumlenkeinheit Mittel aufweist, um das auftreffende Sendelichtbündel auf der dem Lichtempfänger (10) gegenüberliegenden Seite in das zum Lichtempfänger (10) gerichtete Empfangslichtbündel (12) einzuspeisen, wobei der Transmissionslichtpfad die optischen Strahlwege des Streulichts vom Mesbereich (20) zum Lichtempfänger (10) einschließt und zur Funktionsprüfung und Messwertkorrektur über die Lühtumlenkeinheit ein- und ausschaltbar ist,
wobei zum zeitgesteuerten Verschluss des Trans- missionslichtpfads über die Lichtumlenkeinheit eine optische Verschlusseinheit (8) vorhanden ist, **dadurch gekennzeichnet, dass** eine Zeitschaltvorrichtung zum zyklischen Öffnen und Schließen der optischen Verschlusseinheit (8) für den Transmissionslichtpfad durch die Lichtumlenkeinheit vorhanden ist.

2. Streulicht-Sichtweitenmessgerät nach Anspruch 1, **dadurch gekennzeichnet, dass** die optische Verschlusseinheit (8) unmittelbar vor oder nach der Lichtumlenkeinheit angeordnet ist.

3. Streulicht-Sichtweitenmessgerät nach Anspruch 1, **dadurch gekennzeichnet, dass** die optische Verschlusseinheit (8) innerhalb der Lichtumlenkeinheit angeordnet ist.

4. Streulicht-Sichtweitenmessgerät nach Anspruch 1, **dadurch gekennzeichnet, dass** die Lichtumlenkeinheit aus einem flexiblen oder starren Lichtleiter (22) besteht.

5. Streulicht-Sichtweitenmessgerät nach Anspruch 4, **dadurch gekennzeichnet, dass** an den beiden Enden des Lichtleiters (22) eine Ein- bzw. Auskoppeloptik (21, 23) angeordnet ist.

6. Streulicht-Sichtweitenmessgerät nach einem der vorhergehenden Ansprüche, **dadurch gekennzeichnet, dass** zur Funktionsprüfung aus den Messwerten bei geöffneter Verschlusseinheit (8) eine Signalverarbeitungseinheit vorhanden ist.

7. Streulicht-Sichtweitenmessgerät nach einem der vorhergehenden Ansprüche, **dadurch gekennzeichnet, dass** in der Signalverarbeitungseinheit Mittel vorhanden sind, um die Messwerte bei geöffneter Verschlusseinheit über einen vorwählbaren Zeitbereich zu akkumulieren.

8. Streulicht-Sichtweitenmessgerät nach einem der vorhergehenden Ansprüche, **dadurch gekennzeichnet, dass** die Signalverarbeitungseinheit Mittel aufweist, die beim Unterschreiten des akkumulierten Messwertes unter einen Grenzwert eine Signalmeldung ausgibt.

9. Verfahren zum Betrieb eines Streulicht-Sichtweitenmessgerätes mit integrierter Funktionsprüfungs- und Korrektureinheit, wobei ein Lichtsender (1) ein Sendelichtbündel (3) in einen Messbereich (20) aussendet und ein Lichtempfänger (10) Streulicht innerhalb eines Empfangslichtbündels (12) aus dem Messbereich (20) empfängt, wobei sich das Sendelichtbündel (3) und das Empfangslichtbündel (12) im Messbereich (20) kreuzförmig überschneiden, wobei zumindest ein Teil des Sendelichtbündels (3) als ein Transmissionslichtpfad nach dem Durchstrahlen des Messbereiches mit einer Lichtumlenkeinheit auf der dem Lichtempfänger (10) gegenüberliegenden Seite in das zum Lichtempfänger (10) gerichtete Empfangslichtbündel (12) eingespeist wird, wobei der Transmissionslichtpfad die optischen Strahlwege des Streulichts vom Messbereich (20) zum Lichtempfänger (10) ein-schließt und zur Funktionsprüfung und Messwertkorrektur über die Lichtumlenkeinheit ein- und ausschaltbar ist,
wobei zeitgesteuert der Verschluss des Transmissionslichtpfads über die Lichtumlenkeinheit mit einer optischen Verschlusseinheit (8) geöffnet bzw. geschlossen wird, **dadurch gekennzeichnet, dass** über ein Zeitprogramm in einer Zeitschaltvorrichtung die optische Verschlusseinheit (8) für den Transmissionslichtpfad durch die Lichtumlenkeinheit zyklisch geöffnet bzw. geschlossen wird.

10. Verfahren zum Betrieb eines Streulicht-Sichtweitenmessgerätes nach Anspruch 9, **dadurch gekennzeichnet, dass** in einer Signalverarbeitungseinheit die Messwerte bei geöffneter Verschlusseinheit (8) über einen vorwählbaren Zeitbereich akkumuliert werden.

11. Verfahren zum Betrieb eines Streulicht-Sichtweitenmessgerätes nach Anspruch 10, **dadurch gekennzeichnet, dass** die Signalverarbeitungseinheit beim Unterschreiten des akkumulierten Messwertes unter einen Grenzwert eine Signalmeldung ausgibt.

12. Verfahren zum Betrieb eines Streulicht-Sichtweitenmessgerätes nach Anspruch 10, **dadurch gekennzeichnet, dass** die Signalverarbeitungseinheit aus den akkumulierten Messwerten Korrekturwerte für die Streulichtmessung ermittelt.

## Claims

1. Scattered light visibility measuring apparatus with an integrated functional testing and correction unit including a light transmitter (1) to emit a transmitted light beam (3) into a measurement zone (20) and a light receiver (10) with a received light beam (12) for the reception of scattered light from the measurement zone (20), wherein the transmitted light beam (3) and the received light beam (12) intersect crosswise in the measurement zone (20), wherein at least a part of the transmitted light beam (3) as a transmission light path is incident on a light deflection unit (22) after the transmission through the measurement zone, wherein the light deflection unit has means to feed the incoming transmitted light beam on the side opposite the light receiver (10) into the received light beam (12) directed to the light receiver (10), wherein the transmission light path includes the optical pathways of the scattered light from the measurement zone (20) to the light receiver (10) and can be switched on and off via the light deflection unit for the functional testing and the measured value correction and wherein an optical shutter unit (8) is present for the time controlled cut - off of the transmission light path via the light deflection unit is present, **characterized in that** a time control switching device for the cyclic opening and closing of the optical shutter unit (8) for the transmission light path through the light deflection unit is present.

2. Scattered light visibility measuring apparatus in accordance with claim 1, **characterized in that** the optical shutter unit (8) is arranged either directly in front of or directly behind the light deflection unit.

3. Scattered light visibility measuring apparatus in accordance with claim 1, **characterized in that** the optical shutter unit (8) is arranged within the light deflection unit.

4. Scattered light visibility measuring apparatus in accordance with claim 1, **characterized in that** the light deflection unit consists of either a flexible light conductor (22) or a rigid light conductor (22).

5. Scattered light visibility measuring apparatus in accordance with claim 4, **characterized in that** an optical coupling system and/or an optical decoupling system (21, 23) is arranged at both ends of the light conductor (22).

6. Scattered light visibility measuring apparatus in accordance with any one of the preceding claims, **characterized in that** a signal processing unit is provided for the functional testing for the measurement values when the shutter unit (8) is open.

7. Scattered light visibility measuring apparatus in accordance with any one of the preceding claims, **characterized in that** means are present in the signal processing unit, to accumulate measurement values when the shutter unit (8) is open for a predeterminable time interval.

8. Scattered light visibility measuring apparatus in accordance with any one of the preceding claims, **characterized in that** the signal processing unit has means, which outputs an indication signal when the accumulated measurement value falls below a threshold value.

9. A method for the operation scattered light visibility measuring apparatus with an integrated functional testing and correction unit, wherein a light transmitter (1) emits a transmitted light beam (3) into a measurement zone (20) and a light receiver (10) receives scattered light within a received light beam (12) from the measurement zone (20), wherein the transmitted light beam (3) and the received light beam (12) intersect crosswise in the measurement zone (20), wherein at least part of the transmitted light beam (3) as a transmission light path is fed via a light deflection unit opposite the light receiver (10) after the transmission through the measurement zone into the received light beam directed at the light receiver (10), where the transmission light path includes the optical path ways of the scattered light from the measurement zone (20) to the light receiver (10) and for the functional testing and the measured value correction the transmission light path can be switched on and off via the light deflection unit, wherein the shutter of the transmission light path can be opened and closed in time controlled manner via the light deflection unit with an optical shutter unit (8), **characterized in that** the optical shutter unit (8) for the transmission light path is cyclically opened and closed by a timing program in a time control switching device by the light deflection unit.

10. A method for the operation of the scattered light visibility measuring apparatus in accordance with claim 9, **characterized in that** the signal processing unit accumulates the measurement values when the shutter unit (8) is open for a predeterminable time interval.

11. A method for the operation of the scattered light visibility measuring apparatus in accordance with claim 10, **characterized in that** the signal processing unit, outputs an indication signal when the accumulated measured value falls below a threshold value.

12. A method for the operation of the scattered light visibility measuring apparatus in accordance with claim 10, **characterized in that** the signal processing unit determines correction values for scattered light measurement from the accumulated measurement values.

## Revendications

1. Appareil de mesure de visibilité à lumière diffuse comprenant une unité de test de fonction et de correction intégrée avec un émetteur de lumière (1) pour l'envoi d'un faisceau de lumière émise (3) dans une zone de mesure (20) et un récepteur de lumière (10) avec un faisceau de lumière reçue (12) pour la réception de lumière diffuse à partir de la zone de mesure (20), le faisceau de lumière émise (30) et le faisceau de lumière reçue (12) se recoupant en forme de croix dans la zone de mesure (20), au moins une partie du faisceau de lumière émise (3) arrivant sous forme d'un trajet de lumière de transmission après le passage de la zone de mesure sur l'unité de déviation de lumière (22) et l'unité de déviation de lumière présentant des moyens pour envoyer le faisceau de lumière émise arrivant sur le côté opposé au récepteur de lumière (10) dans le faisceau de lumière reçue (12) dirigé vers le récepteur de lumière (10), le trajet de lumière de transmission renfermant des chemins de faisceau optiques de la lumière diffuse de la zone de mesure (20) vers le récepteur de lumière (10) et pouvant être connecté et déconnecté pour le test de fonction et la correction de la valeur mesurée par l'intermédiaire de l'unité de déviation de lumière,
une unité d'obturation (8) optique étant présente pour la fermeture commandée dans le temps du trajet de lumière de transmission par l'intermédiaire de l'unité de déviation de lumière, **caractérisé en ce qu'**un dispositif de commande de temps est présent pour l'ouverture et la fermeture cycliques de l'unité d'obturation (8) optique pour le trajet de lumière de transmission par l'unité de déviation de lumière.

2. Appareil de mesure de visibilité à lumière diffuse selon la revendication 1, **caractérisé en ce que** l'unité d'obturation (8) optique est disposée directement avant ou après l'unité de déviation de lumière.

3. Appareil de mesure de visibilité à lumière diffuse selon la revendication 1, **caractérisé en ce que** l'unité d'obturation (8) optique est disposée à l'intérieur de l'unité de déviation de lumière.

4. Appareil de mesure de visibilité à lumière diffuse selon la revendication 1, **caractérisé en ce que** l'unité de déviation de lumière est constituée d'un conducteur de lumière flexible ou rigide (22).

5. Appareil de mesure de visibilité à lumière diffuse selon la revendication 4, **caractérisé en ce qu'**une optique d'injection ou de dissociation (21, 23) est disposée sur les deux extrémités du conducteur de lumière (22) .

6. Appareil de mesure de visibilité à lumière diffuse selon l'une des revendications précédentes, **caractérisé en ce qu'**une unité de traitement de signal est présente pour le test de fonction à partir des valeurs de mesure lorsque l'unité d'obturation (8) est ouverte.

7. Appareil de mesure de visibilité à lumière diffuse selon l'une des revendications précédentes, **caractérisé en ce que** des moyens sont présents dans l'unité de traitement de signal pour cumuler les valeurs de mesure lorsque l'unité d'obturation est ouverte sur une plage de temps présélectionnable.

8. Appareil de mesure de visibilité à lumière diffuse selon l'une des revendications précédentes, **caractérisé en ce que** l'unité de traitement de signal présente des moyens qui émettent un message de signal lorsque la valeur de mesure cumulée passe au- dessous d'une valeur limite.

9. Procédé pour l'exploitation d'un appareil de mesure de visibilité à lumière diffuse comprenant une unité de test de fonction et de correction intégrée, un émetteur de lumière (1) envoyant un faisceau de lumière émise (3) dans une zone de mesure (20) et un récepteur de lumière (10) recevant de la lumière diffuse à l'intérieur d'un faisceau de lumière reçue (12) provenant de la zone de mesure (20), le faisceau de lumière émise (3) et le faisceau de lumière reçue (12) se recoupant en forme de croix dans la zone de mesure (20), au moins une partie du faisceau de lumière émise (3) étant injectée sous forme d'un trajet de lumière de transmission après la traversée de la zone de mesure avec une unité de déviation de la lumière sur le côté opposé au récepteur de lumière (10) dans le faisceau de lumière reçue (12) dirigé vers le récepteur de lumière (10), le trajet de lumière de transmission renfermant les chemins de faisceau optiques de la lumière diffuse depuis la zone de mesure (20) vers le récepteur de lumière (10) et pouvant être connecté et déconnecté pour le test de fonction et la correction de la valeur de mesure par l'intermédiaire de l'unité de déviation de lumière ;
la fermeture du trajet de lumière de transmission étant ouverte ou fermée de façon commandée dans le temps par l'intermédiaire de l'unité de déviation de lumière avec une unité d'obturation optique (8), **caractérisé en ce que** l'unité d'obturation (8) optique pour le trajet de lumière de transmission est ouverte et fermée de façon cyclique par l'unité de déviation de lumière au moyen d'un programme de temps dans un dispositif de commande de temps.

10. Procédé pour l'exploitation d'un appareil de mesure de visibilité à lumière diffuse selon la revendication 9, **caractérisé en ce que** les valeurs mesurées sont cumulées dans une unité de traitement de signal, lorsque l'unité d'obturation (8) est ouverte, sur une plage de temps présélectionnable.

11. Procédé pour l'exploitation d'un appareil de mesure de visibilité à lumière diffuse selon la revendication 10, **caractérisé en ce que** l'unité de traitement de signal émet un message de signal lorsque la valeur de mesure cumulée passe au-dessous d'une valeur limite.

12. Procédé pour l'exploitation d'un appareil de mesure de visibilité à lumière diffuse selon la revendication 10, **caractérisé en ce que** l'unité de traitement de signal détermine à partir des valeurs mesurées cumulées des valeurs de correction pour la mesure de la lumière diffuse.
